# EUROPEAN PATENT SPECIFICATION

(11) **EP 0 508 788 B1**
(45) Date of publication and mention of the grant of the patent: **24.06.1998**
(21) Application number: 92303181.9
(22) Date of filing: 09.04.1992
(51) Int. Cl.: H02P 7/282, H02P 7/68

(54) **Circuit arrangement of a DC shunt or compound motor**
Schaltungsanordnung eines Gleichstrom-Nebenschluss- oder Kompoundmotors
Système de circuit d'un moteur shunt ou compound à courant continu

(30) Priority: 09.04.1991 GB 9107450
(43) Date of publication of application: 14.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- EP-A- 0 456 345
- FR-A- 2 048 161
- SU-A- 1 476 591

## Description

The present invention relates to DC shunt (or compound) motor arrangement with controllable dynamic characteristics. The conventional DC shunt motor provides high operational efficiency. However, its starting torque is smaller; on the other hand a series type motor provides a greater starting torque but its operational efficiency is lower due to the loss from field drop.

The present invention enables series characteristics to be imparted to a shunt or compound motor. The motor of a preferred embodiment has similar characteristics of load torque against speed to a series motor but has a maximum speed characteristics and a minimum speed characterised like a shunt motor but with better efficiency than a shunt motor. Thereby excellent speed control is achieved and dynamic energy is regenerated due to the field exciting current being smaller.

EP-A-456,345 discloses a D.C. motor arrangement exhibiting both series and shunt characteristics and comprising at least one D.C. motor having a shunt field winding and control means for controlling the current in said shunt field winding, said control means being responsive to an output signal from a detector of the motor armature current and being arranged to increase the current in the shunt field winding as the detected armature current increases.

The present invention provides a D.C. motor arrangement as summarised above, characterised in that a said control means is connected in series with one such shunt field winding and is connected in parallel with an impedance element or with another such shunt field winding, said control means having a high impedance state which results in shunt characteristics at a maximum speed and having a low impedance state which results in shunt characteristics at a minimum speed.

Preferred embodiments are defined in the dependent claims.

Preferred embodiments are described below by way of example only with reference to Figures 1 to 4 of the drawings wherein:
Fig. 1 is a diagram showing the principle of a DC shunt (or compound) motor;
Fig. 1-A is a graph showing the dynamic characteristics of the arrangement of Fig. 1.
Fig. 2 shows an embodiment of the present invention;
Fig. 3 shows a variant with an impedance body (such as resistance or inductance) in place of auxiliary winding as shown in Fig. 2.
Fig. 4 is a diagram of a further embodiment showing an interlock DC motor arrangement with controllable dynamic characteristics and its related circuit.

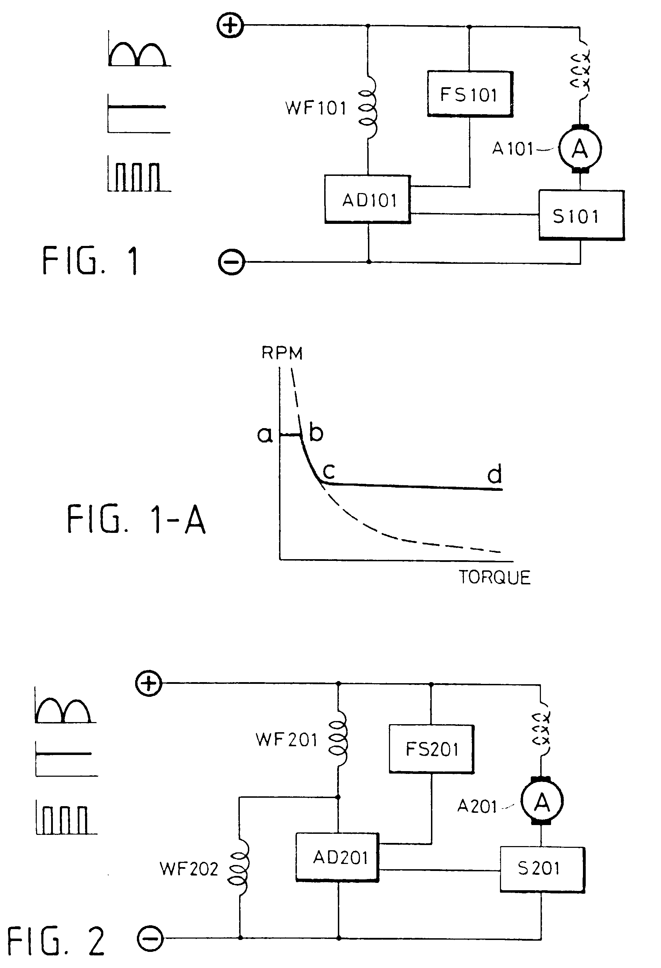

i) Referring to Fig. 1, the motor arrangement shown comprises a main shunt field WF101 in series with an active device AD101 and the series combination coupled to a power supply;
ii) an active device AD101 with a solid-state power switch device such as a thyristor, etc, the power switch device being arranged to provide DC or pulsed DC (in the particular thyristor may be arranged to control DC power by switching at the zero crossing point);
iii) an exciting control switch FS101 for controlling active device AD101 and for the selection of basic exciting current including accepting an electrical-controlling interface or manual control to provide speed control or to control power generating braking i.e. to increase exciting energy collection during operating;
iv) a DC power generator armature A101 which can be externally connected to a double-throw switch and is connected to an armature current detecting device S101 in series, the parallel combination being connected to a DC power supply;
v) a detecting device S101 comprising a series winding or drop resistance (or impedance coil) for generating a control dependent on the armature current level and hence driving active device AD101.

The operational/controlling relationship of device S101 is such that, when armature current is increasing following mutual cut-off, the control signal is stronger, hence, the impedance of active device AD101 is lower, and the exciting current in field winding WF101 is increased to enhance the output torque.

The above motor arrangement may have shunt characteristics with a maximum/minimum speed and series characteristics between the maximum and minimum speed as shown in Figure 1A.

The characteristics of action of the arrangement in Fig. 1 are as follows:-

When current flows into armature A101, due to the control of the field current WF101 winding by the output of active device AD101 as controlled by detector S101, the DC motor has controllable dynamic characteristic, as shown in Fig. 1-A. As shown, the characteristic includes a limited speed characteristic section ab, and due to the shunt field current wherein the field current is proportional to the armature current a characteristic section bc similar to that of a series motor. When the shunt field excitation is limited (or the field is saturated) characteristic working section cd applies which is similar to that of a shunt motor.

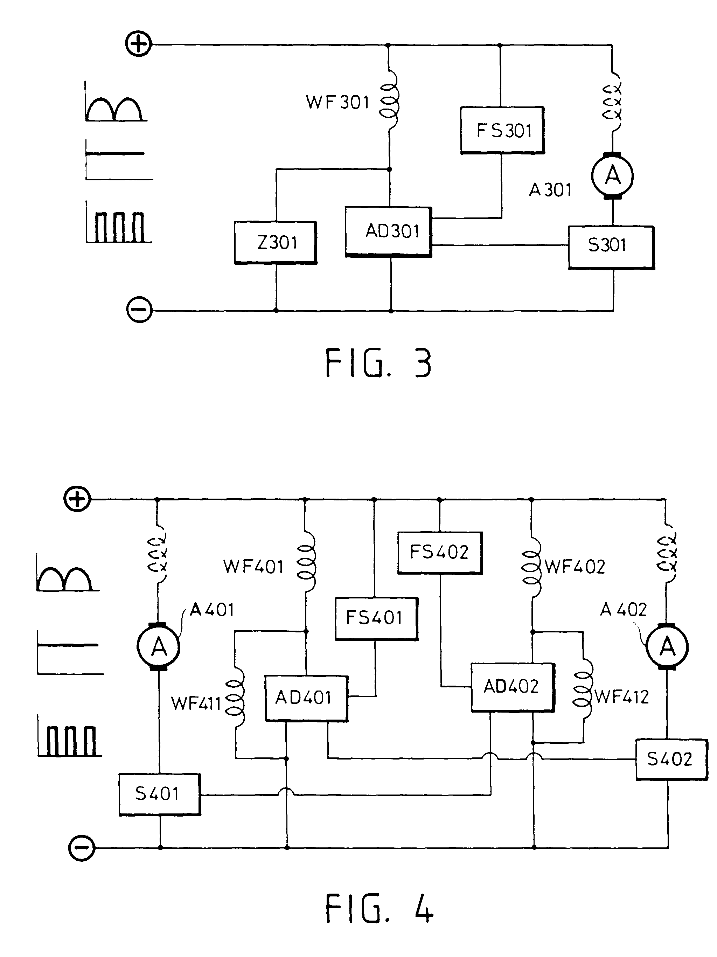

Figs. 2 and 3 show embodiments of the present invention.

As shown in Fig. 2, in this embodiment the active device is parallel to a same-polarity auxiliary winding WF202 of field winding WF201, comprising:
i) a shunt field winding WF201 and auxiliary winding WF202 of the same-polarity series connected each other, and an auxiliary field winding in parallel to active device AD201;
ii) an armature A201 in series with detecting device S201 and the series combination connected to power supply;
iii) an exciting control switch FS201 provided to control active device AD201 for selecting the basic exciting current which may include an electrically controlled interface or manual control to provide speed control or power-generating braking.

The characteristics of action in Fig. 2 are as follows:

When the armature current is too small the signal detected by detecting device S201 is smaller too, and active device AD201 is in a high impedance state. At this moment, the field current intensity is inversely related to the value of the impedance of auxiliary winding WF202 in series with shunt field winding WF202 and a basic exciting current maintains armature rotation speed at a maximum speed determined by the balance between back electromotive force (EMF) and power supply voltage. When the load increases the impedance of active device AD201 reducing and exciting current increasing, the field will enable motor to produce a performance similar that of a series motor. When active device AD201 has reached a saturated state of minimum impedance, the field reaches a maximum exciting state and the motor exhibits characteristics similar to shunt characteristics.

Fig. 3 is an embodiment with an impedance body Z301 (such as resistance or inductance) substituted for the auxiliary winding as shown in Fig. 2, wherein:

When armature current increases following mutual cutoff, the control signal is stronger, the impedance of active device AD101 is lower, and the exciting current in field winding WF101 is increased to enhance the output torque.

The above motor arrangements may be constructed with the characteristic of a maximum/minimum speed shunt and a series characteristic between maximum and minimum speed as shown in Figure 1A.

In the embodiment of Figure 3, impedance body Z201 is preferably a resistance or inductance or capacitance or may be a combinational impedance body in series with shunt winding WF301 and in parallel to active device AD3014.

Armature A301 is in series with detecting device S301.

An exciting control switch FS301 is provided to control active device AD301 so as to select a basic exciting current and may be provided with an electrical-controlled interface or a manual control to form speed control or power generating braking.

The characteristics of action in Fig. 3 are as follows:-

When the armature current is too small the signal detected by detecting device S301 is smaller too, and active device AD301 is in a high impedance state. At this moment the basic exciting current may maintain armature speed in balance between back electromotive force (EMF) and power supply voltage. When the load is increasing, due to the impedance of active device AD301 reducing and the exciting current increasing, the field will enable motor to produce a performance similar to a series motor. When active device AD301 has reached a saturated state of minimum impedance, the field is in a maximally exciting state and motor exhibits characteristics similar shunt characteristics.

The present invention further extends to interlock motor arrangements as shown in Figure 4.

Fig. 4 is a diagram showing an interlocking DC motor arrangement comprising two motors and a related circuit with a controllable dynamic characteristics. The circuit comprises:
i) a first motor set with a shunt field winding WF401 or of same-polarity as and in series with an auxiliary winding WF411, auxiliary winding WF411 being in parallel with an auxiliary device AD401 and armature A401 being series with a detecting device S401 and series combination being connected to the power supply;
ii) a second motor set with a shunt winding WF402 of the same-polarity as and in series with an auxiliary winding WF412, auxiliary winding WF412 being in parallel with an active device AD402 and an armature A402 in series with a detecting device S402 the series combination being connected to a power supply.

The detecting device S401 in series with armature A401 of said first motor set controls active device AD402 of the second motor winding and the detecting device S402 in series with armature A402 of said second motor set controls active device AD401 of the first motor winding. The motors thereby form an interlocking arrangement.

The control of the above interlock circuit is such that, when one motor armature's rotational speed reduces due to this load increasing, the output signal of its detecting device in series with its armature increases owing to the increasing armature current and reduces the impedance of the active device in series with another motor winding, and thereby increases the exciting current of that other motor armature to enable its armature speed to be reduced due to the field flux being increases.

Auxiliary windings WF411 and WF412 may optionally be included in the two motor circuits subject to actual requirements, or may be substituted by a resistance or inductance or capacitance or combinational impedance devices.

Additionally exciting control switches FS401 and FS402 respectively control active devices AD401, AD402 to enable the two motors to run in proportional operation due to the difference of basic field intensity.

To conclude the description mentioned above, the present invention provides controllable dynamic characteristics of load torque against speed to a series motor but has a maximum speed characteristic and a minimum speed characteristic like a shunt motor but with better efficiency than a shunt motor. Thereby excellent speed control is achieved and dynamic energy is requested due to the field exciting current being smaller.

## Claims

1. A DC motor arrangement exhibiting both series and shunt characteristics and comprising at least one DC motor having a shunt field winding (WF101, WF201, WF202, WF301, WF401, WF402) and control means (AD101, AD201, AD301) for controlling the current in said shunt field winding, said control means being responsive to an output signal from a detector (S101, S201, S301, S401, S402) of the motor armature current and being arranged to increase the current in the shunt field winding (WF101, WF201, WF202, WF301, WF401) as the detected armature current increases, characterised in that said control means (AD101, AD201, AD301) is connected in series with one such shunt field winding (WF101, WF201, WF301) and is connected in parallel with an impedance element (Z301) or with another such shunt field winding (WF202), said control means having a high impedance state which results in shunt characteristics (ab) at a maximum speed and having a low impedance state which results in shunt characteristics (cd) at a minimum speed.

2. A D.C. motor arrangement according to claim 1 wherein said control means (AD101, AD201, AD301) is arranged to increase the current in the shunt field winding over a portion (bc) of the speed torque characteristic so as to impart a series characteristic to this portion.

3. A D.C. motor arrangement according to claim 1 or claim 2 wherein said control means (AD101, AD201, AD301) is also responsive to a speed control signal from a control switch means (FS101, FS201, FS301).

4. A D.C. motor arrangement according to claim 3 wherein said control switch means (FS101, FS201, FS301) is arranged to enable power generation during braking.

5. A D.C. motor arrangement according to any preceding claim wherein said detector (S101, S201, S301) is arranged to detect the current in the armature of the motor whose shunt field winding current is controlled by said control means (AD101, AD201, AD301).

6. A D.C. motor arrangement according to any of claims 1 to 4 wherein there are a plurality of D.C. electric motors connected in parallel and said control means (AD401, AD402) is arranged to control the current in the shunt field winding (WF401, WF402) of one motor in response to an output signal from a detector (S402/S401) of current in the armature of another motor and vice versa.

## Patentansprüche

1. GS-Motoranordnung mit sowohl Reihen- als auch Nebenschlußeigenschaften mit mindestens einem GS-Motor mit einer Nebenschluß-Feldwicklung (WF101, WF102, WF202, WF301, WF401, WF402) sowie einer Steuerungseinrichtung (AD101, AD201, AD301) zum Steuern des Stroms in der Nebenschluß-Feldwicklung, wobei die Steuerungseinrichtung auf ein Ausgangssignal aus einem Detektor (S101, S201, S301, S401, S302) des Motorankerstroms anspricht und so angeordnet ist, daß der Strom in der Nebenschluß-Feldwicklung (WF101, WF102, WF202, WF301, WF401, WF402) mit dem erfaßten Ankerstrom zunimmt, **dadurch gekennzeichnet,** daß die Steuerungseinrichtung (AD101, AD201, AD301) mit einer solchen Nebenschluß-Feldwicklung (WF101, WF102, WF301) in Reihe und mit einem Impedanzelement (Z301) oder einer anderen Nebenschluß-Feldwicklung (WF202) parallelgeschaltet ist, wobei die Steuerungseinrichtung einen Zustand hoher Impedanz, welcher bei einer Höchstdrehzahl Nebenschlußeigenschaften (ab) ergibt, sowie einen Zustand niedriger Impedanz aufweist, der bei einer Mindestdrehzahl Nebenschlußeigenschaften (cd) ergibt.

2. GS-Motoranordnung nach Anspruch 1, bei der die Steuerungseinrichtung (AD101, AD201, AD301) den Strom in der Nebenschluß-Feldwicklung über einen Teil (bc) der Drehzahl/Moment-Kennlinie so erhöht, daß diesem Teil eine Reihenschlußcharakteristik erteilt wird.

3. GS-Motoranordnung nach Anspruch 1 oder Anspruch 2, bei der die Steuerungseinrichtung (AD101, AD201, AD301) auch auf ein Drehzahlsteuerungssignal aus einer Steuerschaltereinrichtung (FS101, FS201, FS301) anspricht.

4. GS-Motoranordnung nach Anspruch 3, bei der die Steuerschaltereinrichtung (FS101, FS201, FS301) so angeordnet ist, daß sie eine Energieerzeugung beim Bremsen ermöglicht.

5. GS-Motoranordnung nach einem der vorgehenden Ansprüche, bei der der Detektor (S101, S201, S301) so angeordnet ist, daß er den Strom im Anker des Motors erfaßt, dessen Nebenschluß-Feldwicklungsstrom von der Steuerungseinrichtung (AD101, AD201, AD301) gesteuert wird.

6. GS-Motoranordnung nach einem der Ansprüche 1 - 4, bei der eine Vielzahl von GS-Elektromotoren vorliegt, die parallelgeschaltet sind, und die Steuerungseinrichtung (AD401, AD402) so angeordnet ist, daß sie den Strom in der Nebenschluß-Feldwicklung (WF401, WF402) eines Motors ansprechend auf ein Ausgangssignal aus einem Stromdetektor (S402/S401) im Ankerkreis eines anderen Motors und umgekehrt steuert.

## Revendications

1. Agencement de moteur c.c. présentant à la fois des caractéristiques de montage en série et de montage dérivé ou shunté et comprenant au moins un moteur c.c. avec un enroulement shunté ou dérivé (WF101, WF201, WF202, WF301, WF401, WF402) et des moyens de commande (AD101, AD201, AD301) pour commander le courant dans l'enroulement shunté, les moyens de commande étant sensibles à un signal de sortie provenant d'un détecteur (S101, S201, S301, S401, S402) du courant d'induit de moteur et étant aptes à augmenter le courant dans l'enroulement shunté (WF101, WF201, WF202, WF301, WF401) à mesure qu'augmente le courant d'induit détecté, caractérisé en ce que les moyens de commande (AD101, AD201, AD301) sont montés en série avec un enroulement shunté (WF101, WF201, WF301) et montés en parallèle avec un élément d'impédance (Z301) ou avec un autre enroulement shunté (WF202), ces moyens de commande ayant un état d'impédance élevé qui se traduit par des caractéristiques de shunt (ab) à une vitesse maximum et à un faible état d'impédance qui se traduit par des caractéristiques de shunt (cd) à une vitesse minimum.

2. Agencement de moteur c.c. selon la revendication 1, dans lequel les moyens de commande (AD101, AD201, AD301) sont disposés de façon à augmenter le courant dans l'enroulement shunté sur une portion (DC) de la caractéristique de couple de vitesse de façon à conférer à cette portion une caractéristique de série.

3. Agencement de moteur c.c. selon la revendication 1 ou la revendication 2, dans lequel les moyens de commande (AD101, AD201, AD301) sont également sensibles à un signal de commande de vitesse provenant d'un commutateur de commande (FS101, FS201, FS301).

4. Agencement de moteur c.c. selon la revendication 3, dans lequel le commutateur de commande (FS101, FS201, FS301) est apte à permettre une production de courant électrique pendant le freinage.

5. Agencement de moteur c.c. selon l'une quelconque des revendications précédentes, dans lequel le détecteur (S101, S201, S301) est apte à détecter le courant dans l'induit du moteur dont le courant d'enroulement shunté est commandé par les moyens de commande (AD101, AD201, AD301).

6. Agencement de moteur c.c. selon l'une quelconque des revendications 1 à 4, dans lequel il est prévu une pluralité de moteurs électriques c.c. montés en parallèle et les moyens de commande (AD401, AD402) sont aptes à commander le courant dans l'enroulement shunté (WF401, WF402) d'un moteur en réponse à un signal de sortie provenant d'un détecteur (S402/S401) de courant dans l'induit d'un autre moteur et vice versa.
